# EUROPÄISCHE PATENTANMELDUNG

(11) **EP 1 345 110 A2**
(43) Veröffentlichungstag der Anmeldung: **17.09.2003**
(21) Anmeldenummer: 03002245.3
(22) Anmeldetag: 31.01.2003
(51) Int. Cl.: G06F 3/00, G06F 3/033

(54) **Anpassung einer Mensch-Maschine-Schnittstelle in Abhängigkeit eines Psychoprofils und einer momentanen Befindlichkeit eines Anwenders**

(30) Priorität: 12.03.2002 DE 10210799
(71) Anmelder: SIEMENS AKTIENGESELLSCHAFT, 80333 München (DE)
(72) Erfinder: Dinges, Clemens, 90587 Obermichelbach (DE); Schlereth, Michael, 91452 Wilhermsdorf (DE)

(57) **Zusammenfassung**

Die Erfindung betrifft ein System sowie ein Verfahren zur Anpassung einer Mensch-Maschine-Schnittstelle (2) an die individuellen Bedürfnisse eines Anwenders (1). Das System enthält erste Erfassungsmittel (10) zur Erfassung eines Psychoprofils mindestens eines Anwenders (1), zweite Erfassungsmittel (20) zur Erfassung einer momentanen Befindlichkeit des jeweiligen Anwenders (1) und Adaptionsmittel (30) zur dynamischen Anpassung der Mensch-Maschine-Schnittstelle (2) in Abhängigkeit des erfassten Psychoprofils (18) und der erfassten momentanen Befindlichkeit (28) des jeweiligen Anwenders (1).

## Beschreibung

Die Erfindung betrifft ein System und ein Verfahren zur Anpassung einer Mensch-Maschine-Schnittstelle, insbesondere einer Schnittstelle zwischen einem Anwender und einer Anlage oder einer Maschine.

Die Projektierung von Mensch-Maschine-Schnittstellen, z. B. von Bedien- und Beobachtungssystemen, wird üblicherweise aus abstrakten Bedienszenarien und den in diesen Szenarien von den Anwendern eingenommenen, abstrakten Rollen abgeleitet. Anpassungen der Mensch-Maschine-Schnittstelle durch den Anwender selbst sind entweder gar nicht oder nur in geringem Maß möglich, z. B. in Form von Veränderungen der Position oder der Größe von Ausgabefenstern.

Der Erfindung liegt die Aufgabe zugrunde, eine auf die individuellen Bedürfnisse eines Anwenders zugeschnittene Mensch-Maschine-Schnittstelle zu ermöglichen.

Diese Aufgabe wird durch ein System zur Anpassung einer Mensch-Maschine-Schnittstelle gelöst,
- mit ersten Erfassungsmitteln zur Erfassung eines Psychoprofils mindestens eines Anwenders,
- mit zweiten Erfassungsmitteln zur Erfassung einer momentanen Befindlichkeit des jeweiligen Anwenders und
- mit Adaptionsmitteln zur dynamischen Anpassung der Mensch-Maschine-Schnittstelle in Abhängigkeit des erfassten Psychoprofils und der erfassten momentanen Befindlichkeit des jeweiligen Anwenders.

Diese Aufgabe wird durch ein Verfahren zur Anpassung einer Mensch-Maschine-Schnittstelle gelöst, bei welchem
- ein Psychoprofil eines Anwenders mit ersten Erfassungsmitteln erfasst wird,
- eine momentane Befindlichkeit des jeweiligen Anwenders mit zweiten Erfassungsmitteln erfasst wird und
- die Mensch-Maschine-Schnittstelle mit Adaptionsmitteln in Abhängigkeit des erfassten Psychoprofils und der erfassten momentanen Befindlichkeit des jeweiligen Anwenders dynamisch angepasst wird.

Das erfindungsgemäße System bzw. Verfahren ermöglicht die passive Adaption der Mensch-Maschine-Schnittstelle an das Psychoprofil und die momentane Befindlichkeit eines Anwenders und bewirkt damit die aktive Adaption des Anwenders an das System. Die Adaptionsmittel der Mensch-Maschine-Schnittstelle werten das erfasste Psychoprofil und die erfasste momentane Befindlichkeit aus und passen aufgrund der Ergebnisse dieser Auswertung die Mensch-Maschine-Schnittstelle dynamisch so an, dass der jeweilige Anwender individuell unterstützt wird und damit die Befindlichkeit des Anwenders nicht nur berücksichtigt sondern möglichst auch positiv beeinflusst wird. Durch die Rückkopplung mittels der wiederholten oder kontinuierlichen Erfassung der momentanen Befindlichkeit des Anwenders überprüft bzw. regelt das System automatisch den Erfolg der dynamischen Anpassung der Mensch-Maschine-Schnittstelle. Durch die positive Beeinflussung der individuellen Befindlichkeit des Anwenders wird dessen Leistungsfähigkeit gesteigert, so dass er die Aufgabe, welche er mittels der Mensch-Maschine-Schnittstelle bearbeitet, schneller und besser lösen kann. Der Begriff _{"}Mensch-Maschine-Schnittstelle" ist hier im ursprünglichen Sinn des Wortes zu verstehen, also als eine alle Sinne, Gefühle und den Verstand eines Anwenders betreffende bidirektionale Schnittstelle zu einer technischen Einrichtung. Die Adaptionsmittel dienen der Anpassung der Mensch-Maschine-Schnittstelle in mindestens einer dieser Ausprägungen. Im Gegensatz zum erfindungsgemäßen System werden bei bisher bekannten Systemen zur Anpassung einer Mensch-Maschine-Schnittstelle die Individualität und insbesondere die jeweils aktuelle Befindlichkeit unterschiedlicher Anwender in der gleichen Rolle im gleichen Bedienszenario nicht berücksichtigt. Alle Anwender werden gleich und jeder einzelne Anwender immer in der gleichen Art behandelt. Im Gegensatz zum erfindungsgemäßen System und Verfahren wird eine signifikante Erhöhung des individuellen Glücksgefühls und damit der Leistungsfähigkeit des Anwenders nicht angestrebt und somit in der Regel auch nicht erreicht. Das bisher nicht nutzbare Potential für die Erhöhung der Produktivität und für die Verbesserung der Ergebnisqualität durch die Berücksichtigung des individuellen Psychoprofils und der momentanen, individuellen Befindlichkeit des jeweiligen Anwenders wird erst durch das hier vorgeschlagene System bzw. Verfahren erschlossen.

Gemäß einer vorteilhaften Ausgestaltung der Erfindung weist die Mensch-Maschine-Schnittstelle ein Bedien- und Beobachtungssystem auf, wobei die Adaptionsmittel zur Auswahl von Bedienmöglichkeiten und zur Auswahl von bereitzustellenden Informationen vorgesehen sind. Die Adaptionsmittel passen somit im Bedien- und Beobachtungssystem dynamisch und automatisch die Bedienmöglichkeiten und die bereitzustellenden Informationen an das zuvor erfasste individuelle Psychoprofil und die wiederholt oder kontinuierlich erfasste momentane Befindlichkeit des jeweiligen Anwenders an. Das Bedien- und Beobachtungssystem wird während des Betriebs aktiv an den Anwender angepasst und kann so diesen aktiv beeinflussen. Bei bisher bekannten Bedien- und/oder Beobachtungssystemen sind Anpassungen durch den Anwender während des Betriebs nur stark eingeschränkt möglich. Einstellungen können in der Regel nur während der Projektierungsphase durch einen Projekteur vorgenommen werden und sind somit während der Betriebsführungsphase statisch. Anpassungen eines Bediensystems durch das Bediensystem selbst sind bei bekannten Bediensystemen in der Officewelt zu finden, weniger in der Automatisierungstechnik. Diese Anpassungen basieren jedoch auf starren Regeln, deren jeweilige Anwendung auf statistischen Analysen von Bedienvorgängen beruhen. Als Beispiel sei der automatische Start eines Hilfeassistenten genannt, wenn eine vorgegebene Zeit zwischen zwei Interaktionen verstrichen ist oder die automatische Zuweisung einer Direkt-Wahltaste für eine in einem Aufrufbaum verschachtelte, aber häufig aufgerufene Funktion. Diese von bisher bekannten Bediensystemen selbst durchgeführten Anpassungen berücksichtigen jedoch nicht die Gefühlswelt des jeweiligen Anwenders, da die Anpassungen nur Unterstützungsmechanismen des für alle Anwender gleichen Bediensystems sind. Das Bediensystem soll und will nichts von der Befindlichkeit des jeweiligen Anwenders wissen und diese nicht beeinflussen.

Für die einfache Projektierung der Mensch-Maschine-Schnittstelle wird vorgeschlagen, dass Bewertungsmittel Komponenten der Mensch-Maschine-Schnittstelle im Hinblick auf die Abhängigkeit der jeweiligen Komponente vom Psychoprofil des Anwenders und der Auswirkung der jeweiligen Komponente auf die momentane Befindlichkeit des jeweiligen Anwenders bewerten. Die Bewertung stellt den Zusammenhang zwischen der Ausprägung einer Komponente der Mensch-Maschine-Schnittstelle und dem Psychoprofil eines Anwenders und die Auswirkung auf seine aktuelle Befindlichkeit her (z. B. ohne Auswirkung, Verstärkung einer gewünschten Stimmung, Abschwächung einer ungewünschten Stimmung). Die Komponenten werden in der Regel in der Projektierungsphase des Systems bewertet oder bereits im Rahmen der Entwicklung des Systems. Die Bewertung kann in Form von Default-Werten für Bedienkategorien und zugeordneten Befindlichkeiten bzw. Stimmungslagen im System hinterlegt sein. Die Bewertung kann empirisch mit Hilfe der Bewertungsmittel gewonnen werden. Ergebnisse der Bewertung können z. B. definierte Sollziele, charakterspezifische Belohnungs-/Bestrafungsszenarien sowie stimmungs- und charakterspezifische Regeln für die Informationsselektion sein. Die Bewertung stellt eine direkt (als Bewertung für Kategorien) bzw. indirekt (als ein Alleinstellungsmerkmal des Systems) vermarktbare Ressource dar.

Das erfindungsgemäße System kann unterschiedliche Anwender besonders effektiv unterstützen, wenn Speichermittel zur Speicherung der Zuordnung des erfassten Psychoprofils eines Anwenders zum jeweiligen Anwender vorgesehen sind. Solche Speichermittel, z. B. in Form einer Datenbank, können verschiedene Benutzer-Accounts enthalten, welche beim Einloggen eines Anwenders in das System automatisch geladen und aktiviert werden. Damit ist die relativ zeitaufwändige Erfassung des Psychoprofils nur einmal erforderlich, üblicherweise beim ersten Einloggen bzw. beim Eröffnen eines Benutzer-Accounts.

Da das Psychoprofil des jeweiligen Anwenders dem System nach der einmaligen Erfassung ständig vorliegt, können vorteilhafterweise Auswertemittel zur Auswertung der jeweils erfassten momentanen Befindlichkeit in Abhängigkeit des Psychoprofils des jeweiligen Anwenders vorgesehen werden. Je nach Psychoprofil bzw. Anwender kann so die erfasste Befindlichkeit unterschiedlich bewertet werden und kann das System unterschiedlich auf die momentane Befindlichkeit reagieren.

Um die mögliche Anzahl unterschiedlicher Psychoprofile zu reduzieren und um deren Bewertung zu systematisieren und damit zu vereinfachen, wird vorgeschlagen, dass Klassifizierungsmittel zur Klassifizierung des erfassten Psychoprofils vorgesehen sind. Das erfasste Psychoprofil wird kategorisiert und steht dann zur weiteren Verarbeitung im System zur Verfügung.

Nicht nur die Auswertung, sondern auch die Erfassung der momentanen Befindlichkeit des Anwenders, d. h. des momentanen psychischen und physiologischen Zustands des Anwenders, durch die zweiten Erfassungsmittel ist gemäß einer weiteren vorteilhaften Ausgestaltung der Erfindung vom erfassten Psychoprofil abhängig. Je nach Psychoprofil des jeweiligen Anwenders können so unterschiedliche Erfassungsarten und Erfassungszeitpunkte gewählt werden. Die zweiten Erfassungsmittel können z. B. erste Messmittel zur Erfassung eines Bedienverhaltens des Anwenders und/oder zweite Messmittel zur Erfassung biometrischer Daten aufweisen.

Besonders vorteilhaft lässt sich das beschriebene System für die Anlagenbedienung und das Anlagenengineering einsetzen, wenn die Mensch-Maschine-Schnittstelle, die die Anwenderbeeinflussung durchführt, eine Schnittstelle zwischen dem Anwender und einer Anlage bildet. Unter dem Begriff Anlage ist hier eine einzelne oder mehrere Maschinen, eine automatisierungstechnische Anlage, eine Fertigungsanlage, ein industrieller Prozess und Ähnliches zu verstehen. Bisher bekannte Systeme für die Anlagenbedienung und für das Anlagenengineering werden aus abstrakten Bedienszenarien und den dabei eingenommenen Rollen der Anwender abgeleitet. Alle Anwender werden bei der Ausübung einer bestimmten Rolle gleich behandelt. Ziel ist nicht die möglichst dichte Annäherung an das jeweilige individuelle emotionale Profil des Anwenders.

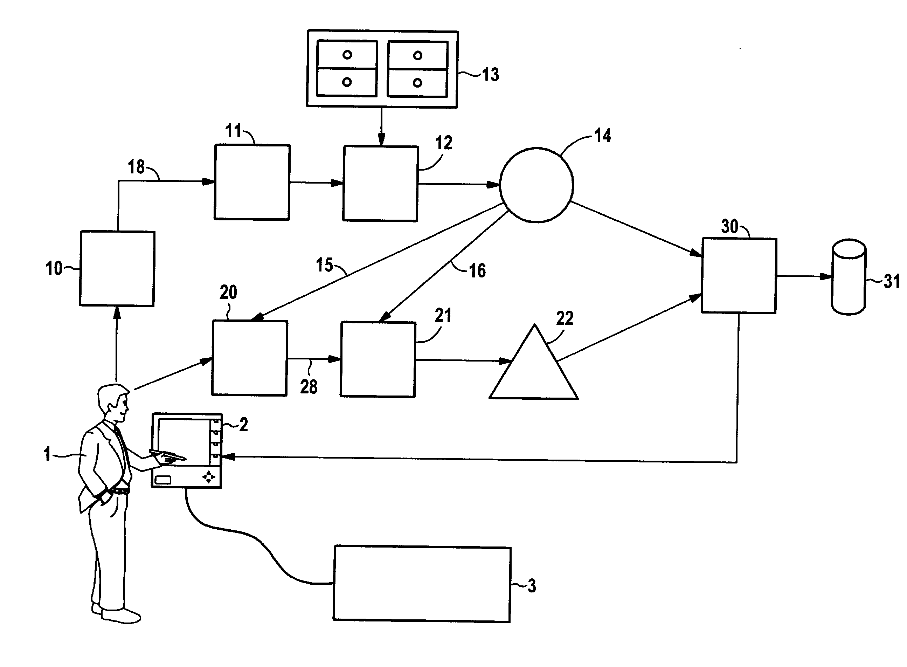

Nachfolgend wird die Erfindung anhand des in der Figur dargestellten Ausführungsbeispiels näher beschrieben und erläutert.

Die Figur zeigt ein System zur Anpassung einer Mensch-Maschine-Schnittstelle 2. Die Mensch-Maschine-Schnittstelle 2 bildet die Schnittstelle zwischen einem Anwender 1 und einer Anlage oder Maschine 3 und ist im Ausführungsbeispiel als Bedien- und Beobachtungssystem ausgebildet. Der Anwender 1 bedient und beobachtet mittels der Mensch-Maschine-Schnittstelle 2 die Maschine 3. Erste Erfassungsmittel 10 erfassen ein individuelles Psychoprofil 18 des Anwenders 1, welches von ersten Auswertemitteln 11 ausgewertet wird. Das erfasste und ausgewertete Psychoprofil wird mit Klassifizierungsmitteln 12 klassifiziert, d. h. in verschiedene Klassen 13 eingeordnet. Das Ergebnis der Psychoprofilbestimmung ist mit dem Bezugszeichen 14 gekennzeichnet. Mit zweiten Erfassungsmitteln 20 wird eine momentane Befindlichkeit des Anwenders 1 erfasst. Die erfasste momentane Befindlichkeit 28 wird mit zweiten Auswertemitteln 21 ausgewertet. Sowohl die Erfassung durch die zweiten Erfassungsmittel 20 als auch die Auswertung durch die Auswertemittel 21 kann in Abhängigkeit des Ergebnisses 14 der vorhergehenden Psychoprofilbestimmung erfolgen. Diese Abhängigkeit ist mit dem Bezugszeichen 15 bzw. 16 gekennzeichnet. Das Ergebnis 22 der Befindlichkeitsbestimmung und das Ergebnis 14 der Psychoprofilbestimmung sind Eingangsgrößen der Adaptionsmittel 30. Die Adaptionsmittel 30 haben Zugriff auf Speichermittel 31 und beeinflussen die Mensch-Maschine-Schnittstelle 2.

Im Folgenden sollen die der Erfindung zugrunde liegenden Ideen anhand des Ausführungsbeispiels erläutert werden. Die Erfindung baut auf der Beobachtung auf, dass glückliche Menschen am produktivsten sind. Durch die anwenderspezifische, d. h. in Abhängigkeit des Psychoprofils und der momentanen Befindlichkeit eines Anwenders 1 erfolgende Anpassung einer Mensch-Maschine-Schnittstelle 2 und somit durch die aktive Beeinflussung des Anwenders 1 wird dessen individuelles Glücksgefühl und damit seine Arbeitsproduktivität erhöht.

Die Erfassung des Psychoprofils des Anwenders 1 erfolgt üblicherweise einmalig mit den ersten Erfassungsmitteln 10. Das individuelle Psychoprofil eines Anwenders 1 berücksichtigt z. B. dessen emotionale Grundmuster, Werte, Grundanschauungen, etc. Das erfasste Psychoprofil 18 wird mit den Klassifizierungsmitteln 12 kategorisiert und dem Benutzer-Account des jeweiligen Anwenders 1 zugeordnet. Die Kategorisierung kann nach unterschiedlichen Ansätzen und Methoden erfolgen. Solche Ansätze zur Kategorisierung und Bestimmung von Psychoprofilen wurden z. B. von Gunter Dueck, David Keirsey, Myers-Brigg oder mehrdimensional im Freiburger Persönlichkeitsinventar entwickelt. Sie basieren üblicherweise auf Carl Gustav Jungs Theorie von "psychologischen Typen". Carl Gustav Jung, ein Schüler von Sigmund Freud, hatte aufgrund seiner praktischen Arbeit als Psychoanalytiker mit Patienten drei Dispositionspaare, drei Temperamente, entdeckt, die bei jedem Menschen unterschiedlich ausgeprägt sind (Denken - Fühlen; Empfinden-Intuition; Extraversion - Introversion). Abhängig vom Ansatz lassen sich so Persönlichkeitstypen in verschiedene Klassen 13 bzw. Unterklassen einteilen. Die Kategorisierung dient als "Grobjustierung", z. B. für die Wahl des Belohnungsprofils in der Bedienung. Die "Feinjustierung" erfolgt durch die Erfassung und Bewertung der momentanen Befindlichkeit des Anwenders 1. Die Erfassung des Psychoprofils kann das System bei der Einrichtung des Benutzer-Accounts des jeweiligen Anwenders 1 durchführen. Es erfolgt keine Selbsteinschätzung durch den Anwender 1. Das Psychoprofil wird nur soweit erhoben, wie es für die jeweilige Anwendung, hier z. B. die Automatisierungstechnik, erforderlich ist. Im Folgenden sind Beispiele für erste Erfassungsmittel 10, erste Auswertemittel 11 und Klassifizierungsmittel 12 genannt. Die Grenzen zwischen diesen Komponenten sind teilweise fließend, Erfassungsmittel, Auswertemittel und Klassifizierungsmittel können z. B. in einem Tool zusammengefasst sein. Die Erfassung kann dadurch erfolgen, dass der Anwender 1 ein elektronisches Spiel spielt. Durch eine Bewertung des Anwenderverhaltens im Spiel und/oder des Spielergebnisses und/oder der Art des gewählten Spiels (z. B. Ego-Shooter, Simulationsspiel) kann das Psychoprofil des jeweiligen Anwenders 1 bestimmt werden. In einem zweiten Beispiel beantwortet der Anwender 1 mit Empfindungen verbundene Fragen, äußert positive/negative Gefühle beim Betrachten von gezeigten Bildern oder beim Hören von Musiksamples.

Schließlich kann durch Beantwortung eines auf die oben genannten Ansätze (Keirsey, Freiburger Persönlichkeitsinventar etc.) zugeschnittenen Fragebogens und durch die automatisierte Erfassung und Auswertung der Antworten des Anwenders 1 die Erfassung bzw. Bestimmung des Psychoprofils erfolgen. Eine solche Psychoprofilerfassung kann durch interaktive Erfassung der Antworten des Anwenders 1 mittels Webtechnologien erfolgen, z. B. im Internet oder in einem Intranet.

Die Erfassung der momentanen Befindlichkeit des Anwenders 1 kann durch Erfassung und Auswertung des allgemeinen Bedienverhaltens, z. B. Vergleich der Häufigkeit wiederholter Tastenanschläge in bestimmten Bediensituationen "sonst" mit "heute" ("nervöses Hämmern auf der Tastatur"...), Vergleich der Art der Mausbewegung, Vergleich der Zeitabstände zwischen bestimmten Interaktionen (Menüaufrufe...) und Ähnlichem erfolgen. Weitere Erfassungsverfahren basieren auf der Auswertung biometrischer Messungen z. B. des Sprachsignals (z. B. Analyse des Glottisflusses), von Armbewegungen (z. B. "elektronischer DJ und Armband" oder "virtuelle Tastatur", bei der an den Armen zwei Armbänder sind, so dass man in die Luft/auf irgendeinen Tisch tippen kann), der Leitfähigkeit der Haut (z. B. an der Maus abgegriffen, Lügendetektor), der Körpertemperatur oder der Beobachtung des Gesichts, der Mimik, der Kopfbewegungen. Die oben genannten Erfassungsverfahren lassen sich zur Verbesserung des Ergebnisses kombinieren. Im Gegensatz zur Erfassung des Psychoprofils darf der Zeitaufwand für die Erfassung der momentanen Befindlichkeit nicht groß sein, da die Erfassung in der Betriebsführungsphase erfolgen muss, z. B. in der Login-Phase und/oder auch später (für dynamische Anpassung des Bedien- und Beobachtungssystems, wenn sich z. B. die Stimmungslage des Anwenders 1 durch die unten genannten Maßnahmen verbessert hat). Das Vorgehen bei der Erfassung und die Auswertung der Ergebnisse der Erfassung der momentanen Befindlichkeit erfolgt immer abhängig vom emotionalen Grundmuster, vom Psychoprofil des jeweiligen Anwenders. Ein Ergebnis 22 der Befindlichkeitsbestimmung kann z. B. sein: "Bediener sehr müde und unkonzentriert". Neben der allgemeinen Tagesform und der Stimmungslage kann auch die spezielle Reaktion des Anwenders 1 auf Aktionen des Bedienund Beobachtungssystems die Befindlichkeit charakterisieren, z. B. "will anscheinend heute keine Details wissen", "will anscheinend vor dem Mittagessen kein Öl mehr nachfüllen". Das Ergebnis 22 der Befindlichkeitsbestimmung wird zusammen mit dem Ergebnis 14 der Psychoprofilbestimmung zur Bestimmung einer Systemreaktion durch die Adaptionsmittel 30 genutzt. Die Adaptionsmittel 30 sind beispielsweise auf einem Rechner ablauffähige Algorithmen.

Die Adaptionsmittel 30 beeinflussen gezielt, zum individuellen Psychoprofil passend, die erkannte Befindlichkeit des Anwenders 1 (aktive Adaption des Anwenders 1) durch Anpassung der Mensch-Maschine-Schnittstelle 2. Es wird versucht, den Anwender 1 an das System bzw. die Aufgabe "anzupassen" indem sich das System an den individuellen Anwender 1 anpasst. Dabei wird das jeweilige Psychoprofil berücksichtigt. Der eine Anwender mit einem ersten Psychoprofil bevorzugt Verständnis der Prinzipien, will offene Lösungsfindung, strukturiert und plant seine Arbeit selbst. Ein zweiter Anwender mit einer anderen Persönlichkeitsausprägung, einem zweiten Psychoprofil will hingegen nach Regeln arbeiten und will wissen was ihn am nächsten Tag erwartet. Ein dritter Anwender mit einem wiederum unterschiedlichen dritten Psychoprofil schließlich arbeitet am liebsten ungeplant und situationsbezogen. Das hier vorgeschlagene System nutzt diese Informationen und passt dementsprechend die Mensch-Maschine-Schnittstelle 2 an. Das System stellt dem Anwender abhängig von seiner jeweiligen Psychoprofilausprägung unterschiedliche Informationen zur Verfügung, z. B. ein workflow-orientiertes Handbuch oder ein prinzip-orientiertes Handbuch. Auch die Wahl der Art und Weise der Informationsbereitstellung (z. B. visuell, akustisch, haptisch), ist unter dem Oberbegriff _{"}Anpassung der Mensch-Maschine-Schnittstelle" zu verstehen. Beim hier vorgeschlagenen System und Verfahren bestehen im Gegensatz zu Office-Applikationen wesentlich mehr Möglichkeiten, die Anwenderzufriedenheit und damit die Produktivität des Anwenders zu erhöhen. Die Anpassung der Mensch-Maschine-Schnittstelle zur Erzielung von Zufriedenheit und Arbeitsglück kann weit über die reine Anpassung einer Bedieneroberfläche hinausgehen: Weitere Ausgestaltungen einer Anpassung der Mensch-Maschine-Schnittstelle sind individualisierte Belohnungs-/Bestrafungsverfahren und/oder Verfahren zur Auswahl der einem Anwender zur Verfügung gestellten Informationen (Informationsselektion), jeweils abhängig vom Psychoprofil und/oder der momentanen Befindlichkeit des jeweiligen Anwenders.

Im Folgenden werden Ausführungsbeispiele für Anpassungen der Mensch-Maschine-Schnittstelle 2 genannt, welche einzeln oder in Kombination genutzt werden können.

Generell kann die Art der Informationswiedergabe bzw. -darstellung, z. B. auf einem Monitor, beeinflusst werden: Z. B. Farbschemata (Farben für Hintergrund, Fensterrahmen, Schriftfarbe), Layout/Gestaltung (Anzahl/Lage der Fenster, Skins), Informationsmenge, Fonts (Schriftart, Schriftgröße), Übernahme von Gestaltungsparadigmen der Unterhaltungsindustrie (z. B. von Ego-Shootern, Spielfilmen). Bedienbäume (es gibt mehrere!) können mit unterschiedlichsten Interaktionsformen genutzt werden: Z. B. Zuordnung tastenbedienbarer Funktionen, Zuordnung mausbedienbarer Funktionen, Funktionen können nur durch "Überzeugung" des Bediensystems ausgelöst werden, Funktionen können nur durch "Anschreien" ausgelöst werden (dient dem Aggressionsabbau), Tiefe/Breite des Bedienbaums, Gruppierung der Funktionen, Freizügigkeit der Funktionsauswahl, Geschwindigkeit des Bediensystems (hektisch, geruhsam...). Das System wählt unterschiedliche Soundschemata für die Anzeige auftretender Ereignisse, Hintergrundmusik (z. B. Flughafenmusik, "drum `n bass"), Hintergrundgeräusche (z. B. Wassergeplätscher), Geruchsschemata, Belohnungsschemata (z. B. "Top-Ten", Top-Scorer, Punktestand, Einblendung eines Videostreams (TV, Spielfilm etc.)). Der Umfang der angebotenen Hilfe wird angepasst an die Bedürfnisse des Anwenders 1 (Hintergrundinformationen, "Kochrezepte", "cheats and tricks", guided tour etc.). Schließlich lassen sich Art und Umfang der nicht für die Anlagenbedienung/-engineering benötigten Informationen wie z. B. Newsticker, Mini-Spiele (Tetris-Klasse), Einblendung einer Webcam zur Beeinflussung der momentanen Befindlichkeit des Anwenders 1 nutzen (z. B. im Rahmen von Belohnungsschemata). Um Gewöhnungseffekte zu vermeiden, die die Beeinflussungsstärke des jeweiligen Adaptionsmittels stark abschwächen, ist das System so gestaltet, dass wirkungsgleiche Ausführungen eines Adaptionsmittels nahtlos nachträglich in das System eingebracht bzw. im System getauscht werden können (z. B. neue Hilfesysteme, Belohnungs-/Bestrafungsverfahren, Hintergrundmusiken etc.).

Verfahren für die Erfassung des Psychoprofils eines Probanden sind z. B. in der differentiellen Psychologie bekannt. Nicht bekannt sind hingegen die hier beschriebene Verbindung mit einer Mensch-Maschine-Schnittstelle und die Konzeption des beschriebenen Systems. Auch Systeme zur Erfassung des momentanen Zustands einer Person sind bekannt. Diese Systeme kennen jedoch keine Klassifizierung des individuellen Psychoprofils und daraus abgeleitet die individuelle Systemreaktion bzw. Beeinflussung des Anwenders. Als Beispiel sei ein so genanntes Smartkom-System genannt, welches aus der Mimik erfasst, dass der Bediener unsicher/unzufrieden ist. In diesem Fall wird das Bedieninterface in einer für alle Benutzer gleichen Weise angepasst. Bei dem hier vorgeschlagenen System wird hingegen für Anwender mit einer Persönlichkeit gemäß einem ersten Psychoprofil (s. o.) noch einmal das Prinzip der Systemfunktionalität erläutert, während für Anwender mit einem zweiten Psychoprofil ein Rezept mit den notwendigen Handlungsschritten eingeblendet wird.

Zusammengefasst betrifft die Erfindung somit ein System sowie ein Verfahren zur Anpassung einer Mensch-Maschine-Schnittstelle 2 an die individuellen Bedürfnisse eines Anwenders 1. Das System enthält erste Erfassungsmittel 10 zur Erfassung eines Psychoprofils mindestens eines Anwenders 1, zweite Erfassungsmittel 20 zur Erfassung einer momentanen Befindlichkeit des jeweiligen Anwenders 1 und Adaptionsmittel 30 zur dynamischen Anpassung der Mensch-Maschine-Schnittstelle 2 in Abhängigkeit des erfassten Psychoprofils 18 und der erfassten momentanen Befindlichkeit 28 des jeweiligen Anwenders 1.

## Patentansprüche

1. System zur Anpassung einer Mensch-Maschine-Schnittstelle (2)
- mit ersten Erfassungsmitteln (10) zur Erfassung eines Psychoprofils mindestens eines Anwenders (1),
- mit zweiten Erfassungsmitteln (20) zur Erfassung einer momentanen Befindlichkeit des jeweiligen Anwenders (1) und
- mit Adaptionsmitteln (30) zur dynamischen Anpassung der Mensch-Maschine-Schnittstelle (2) in Abhängigkeit des erfassten Psychoprofils (18) und der erfassten momentanen Befindlichkeit (28) des jeweiligen Anwenders (1).

2. System nach Anspruch 1,
**dadurch gekennzeichnet,**
**dass** die Mensch-Maschine-Schnittstelle (2) ein Bedien- und Beobachtungssystem aufweist, wobei die Adaptionsmittel (30) zur Auswahl von Bedienmöglichkeiten und zur Auswahl von bereitzustellenden Informationen vorgesehen sind.

3. System nach Anspruch 1 oder 2,
**dadurch gekennzeichnet,**
**dass** das System Bewertungsmittel zur Projektierung der Mensch-Maschine-Schnittstelle (2) aufweist, wobei die Bewertungsmittel zur Bewertung von Komponenten der Mensch-Maschine-Schnittstelle (2) im Hinblick auf die Abhängigkeit der jeweiligen Komponente vom Psychoprofil des Anwenders (1) und der Auswirkung der jeweiligen Komponente auf die momentane Befindlichkeit des jeweiligen Anwenders (1) vorgesehen sind.

4. System nach einem der vorhergehenden Ansprüche,
**dadurch gekennzeichnet,**
**dass** das System Speichermittel (31) aufweist, welche zur Speicherung der Zuordnung des erfassten Psychoprofils (18) eines Anwenders zum jeweiligen Anwender (1) vorgesehen sind.

5. System nach einem der vorhergehenden Ansprüche,
**dadurch gekennzeichnet,**
**dass** das System Auswertemittel (21) aufweist, welche zur Auswertung der jeweils erfassten momentanen Befindlichkeit (28) in Abhängigkeit des erfassten Psychoprofils (18) des jeweiligen Anwenders (1) vorgesehen sind.

6. System nach einem der vorhergehenden Ansprüche,
**dadurch gekennzeichnet,**
**dass** Klassifizierungsmittel (12) zur Klassifizierung des erfassten Psychoprofils (18) vorgesehen sind.

7. System nach einem der vorhergehenden Ansprüche,
**dadurch gekennzeichnet,**
**dass** die zweiten Erfassungsmittel (20) zur vom erfassten Psychoprofil (18) abhängigen Erfassung der momentanen Befindlichkeit des Anwenders (1) vorgesehen sind.

8. System nach einem der vorhergehenden Ansprüche,
**dadurch gekennzeichnet,**
**dass** die zweiten Erfassungsmittel (20) erste Messmittel zur Erfassung eines Bedienverhaltens des Anwenders (1) und/oder zweite Messmittel zur Erfassung biometrischer Daten aufweisen.

9. System nach einem der vorhergehenden Ansprüche,
**dadurch gekennzeichnet,**
**dass** die Mensch-Maschine-Schnittstelle (2) eine Schnittstelle zwischen dem Anwender (1) und einer Anlage (3) bildet.

10. Verfahren zur Anpassung einer Mensch-Maschine-Schnittstelle (2), bei welchem
- ein Psychoprofil eines Anwenders (1) mit ersten Erfassungsmitteln (10) erfasst wird,
- eine momentane Befindlichkeit des jeweiligen Anwenders (1) mit zweiten Erfassungsmitteln (20) erfasst wird und
- die Mensch-Maschine-Schnittstelle (2) mit Adaptionsmitteln (30) in Abhängigkeit des erfassten Psychoprofils (18) und der erfassten momentanen Befindlichkeit (28) des jeweiligen Anwenders (1) dynamisch angepasst wird.

11. Verfahren nach Anspruch 10,
**dadurch gekennzeichnet,**
**dass** die Mensch-Maschine-Schnittstelle (2) ein Bedien- und Beobachtungssystem aufweist und die Adaptionsmittel (30) Bedienmöglichkeiten und bereitzustellende Informationen auswählen.

12. Verfahren nach Anspruch 10 oder 11,
**dadurch gekennzeichnet,**
**dass** die Mensch-Maschine-Schnittstelle (2) mit Bewertungsmitteln projektiert wird, wobei die Bewertungsmittel Komponenten der Mensch-Maschine-Schnittstelle (2) im Hinblick auf die Abhängigkeit der jeweiligen Komponente vom Psychoprofil des Anwenders (1) und der Auswirkung der jeweiligen Komponente auf die momentane Befindlichkeit des jeweiligen Anwenders (1) bewerten.

13. Verfahren nach einem der Ansprüche 10 bis 12,
**dadurch gekennzeichnet,**
**dass** eine Zuordnung des erfassten Psychoprofils (18) eines Anwenders (1) zum jeweiligen Anwender (1) in Speichermitteln (31) gespeichert wird.

14. Verfahren nach einem der Ansprüche 10 bis 13,
**dadurch gekennzeichnet,**
**dass** die jeweils erfasste momentane Befindlichkeit (28) mit Auswertemitteln (21) in Abhängigkeit des erfassten Psychoprofils (18) des jeweiligen Anwenders (1) ausgewertet wird.

15. Verfahren nach einem der Ansprüche 10 bis 14,
**dadurch gekennzeichnet,**
**dass** das erfasste Psychoprofil (18) mit Klassifizierungsmitteln (12) klassifiziert wird.

16. Verfahren nach einem der Ansprüche 10 bis 15,
**dadurch gekennzeichnet,**
**dass** die zweiten Erfassungsmittel (20) die momentane Befindlichkeit des Anwenders (1) abhängig vom erfassten Psychoprofil (18) erfassen.

17. Verfahren nach einem der Ansprüche 10 bis 16,
**dadurch gekennzeichnet,**
**dass** erste Messmittel der zweiten Erfassungsmittel (20) ein Bedienverhalten des Anwenders (1) und/oder zweite Messmittel der zweiten Erfassungsmittel (20) biometrische Daten erfassen.

18. Verfahren nach einem der Ansprüche 10 bis 17,
**dadurch gekennzeichnet,**
**dass** die Mensch-Maschine-Schnittstelle (2) eine Schnittstelle zwischen dem Anwender (1) und einer Anlage (3) bildet.
